# EUROPEAN PATENT APPLICATION

(11) **EP 4 059 842 A1**
(43) Date of publication of application: **21.09.2022**
(21) Application number: 21184457.6
(22) Date of filing: 08.07.2021
(51) Int. Cl.: B64C 39/02, G01D 4/00, G01D 11/30

(54) **DEVICE AND METHOD FOR READING UTILITY METERS**

(30) Priority: 16.03.2021 IT 202100006215
(71) Applicant: Despace S.r.l., 20060 Gessate MI (IT)
(72) Inventor: Attanà, Manuela Rosaria Michaela, 20060 Gessate MI (IT); De Siati, Luigi, 20060 Gessate MI (IT)
(74) Representative: Perani & Partners S.p.A.

(57) **Abstract**

A device (1) for reading utility meters comprises a transceiver configured to send and/or receive data to/from utility meters; a drone (3) having a seat (31), the transceiver being inserted in the seat (31); fastening means (4) configured to lock the transceiver in the seat (31).

## Description

### Field of the invention

The present invention relates to a device and a method for reading utility meters, such as gas and water meters. In particular, the present disclosure relates to a device and a method that afford remote reading of utility meters.

### Background art

Meters for household utilities, such as gas and water, are known in the art. These meters require periodic readings to allow the distribution companies to account for the consumptions of each utility.

In order to acquire readings of these meters, distribution company operators must visit them periodically. In particular, each operator is equipped with a terminal that is capable of querying the meter and transmitting the detected data to the distribution companies.

The prior art meter reading method requires the operator to be on-site to detect the data from all the meters of interest. The local characteristics of the area of interest may strongly affect the work of the meter reading operator. Areas that are hard to reach and access are a challenge for the operator's work.

### Summary of the invention

Therefore, the technical purpose of the present invention is to provide a device and a method for reading utility meters that can obviate the problems of the prior art.

In particular, an object of the present invention is to provide a device and a method for reading utility meters that can read a maximized number of meters in a minimized time interval.

A further object of the present invention is to provide a device and a method that can be used to read metes in hard to reach and access areas.

The aforementioned technical purpose and objects are substantially fulfilled by the device and method for reading utility meters that comprise the technical features as disclosed in one or more of the accompanying claims.

### Advantages of the Invention

This invention solves the technical problem. That is, it can provide a meter reading device comprising a drone, which is therefore capable of getting up in flight. The drone is also equipped with a transceiver capable of sending and/or receiving data to/from meters.

Advantageously, the transceiver allows the operator to take meter readings in hardly reachable areas by remotely piloting the drone close to the meters.

Furthermore, since the drone can query a multitude of meters in a short period of time by moving quickly from one meter to another or simply by flying over them, the time required for data detection can be minimized.

### BIEF DESCRIPTION OF THE DRAWINGS

Further features and advantages of the present invention will result more clearly from the illustrative, non-limiting description of a preferred, non-exclusive embodiment of a meter reading device as shown in the accompanying figures, in which:
- Figure 1 is a perspective view of a meter reading device according to the present invention;
- Figure 2 is a perspective view of a first detail of the device of Figure 1;
- Figure 3 is a perspective view of a second detail of the device of Figure 1.

### DETAILED DESCRIPTION

Particularly referring to the annexed figures, numeral 1 designates a device for reading utility meters according to the present invention.

The device 1 comprises a drone 3. Namely, the drone 3 comprises a main body 33 having an upper surface 34 and a lower surface 35 opposite to the upper surface 34. Preferably, the main body 33 has four arms 331, which are specifically coplanar and extend along two perpendicular directions.

More in detail, the drone 3 is preferably of the multirotor type and comprises four propellers 37. Each propeller 37 is connected to its respective arm 331 of the main body 33 of the drone 3 proximate to the upper surface 34.

Preferably, the drone 3 further comprises at least two legs 32. Still preferably, the legs 32 project out of the lower surface 35 of the main body 33 and extend from a base 321 to a top 322 perpendicular to the lower surface 35. The legs 32 of the drone 3 are connected to each other at the base 321. The connection between the legs 32 of the drone 3 defines a bearing portion 36 of the drone 3.

Advantageously, the bearing portion 36 of the drone 3 provides greater stability to the device 1 on the ground.

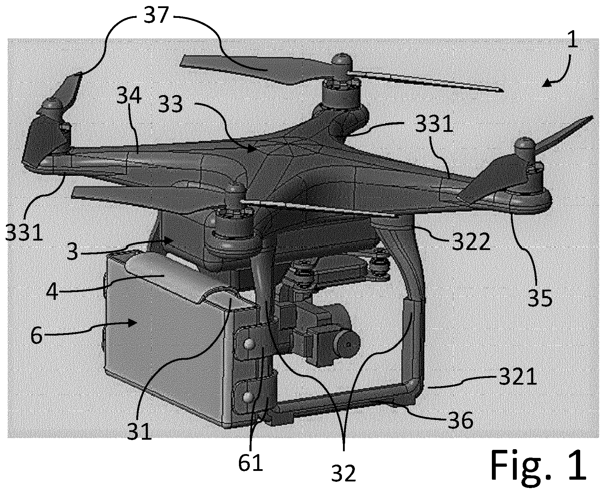

As shown for instance in Figure 1, the device 1 comprises a container 6 connected to the drone 3. Preferably, the container 6 is made of a semirigid material.

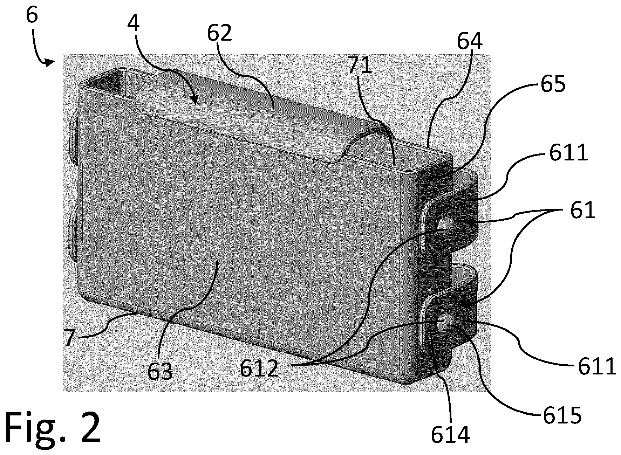

Particularly referring to Figure 2, it should be noted that the container 6 comprises a case 7 having a front surface 63 and an opposite rear surface 64. The front surface 63 and the rear surface 64 are substantially parallel to the legs 32 of the drone 3. The case 7 of the container 6 also has two opposite lateral surfaces 65 and an upper opening 71. The two lateral surfaces 65 connect the front surface 63 and the rear surface 64. Preferably, the rear surface 64 of the case 7 of the container 6 faces the drone 3.

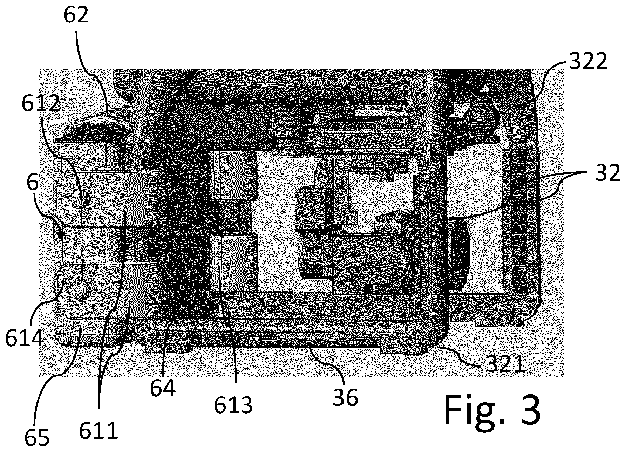

In one aspect of the present invention, the container 6 comprises connecting elements 61. The connecting elements 61 connect the container 6 to the drone 3, in particular to the legs 32. As shown in Figure 3, the connecting elements 61 of the container 6 comprise at least one belt 611.

In particular, each belt 611 is connected to the case 7. The belt 611 extends between an attachment portion 613 and an end 614. The attachment portion 613 is located at the rear surface 64 of the case 7.

As shown for example in Figure 3, the container 6 is connected to the legs 32 of the drone 3 by means of the aforementioned belt 611. The belt 611 wraps the leg 32 of the drone 3 to connect the container 6 to the drone 3. More in detail, the container 6 is connected to the legs 32 of the drone 3 near its base 321.

According to the preferred embodiment of the invention, the connecting elements 61 comprise a plurality of buttons 612. These buttons 612 are preferably press stud buttons. Each button 612 comprises a first element 615 and a second element (not shown) designed to be coupled to the first.

In detail, the first element 615 of the button 612 is placed on each belt 611 proximate the end 614 and a second element of the button 612 is placed on the lateral surface 65 of the case 7 of the container 6. Each belt 611 is designed to be fixed to the container 6 by a respective button 612. Namely, the belt 611 wraps the leg 32 of the drone 3 and fixes the container 6 to the drone 3 by coupling the elements of the button 612.

In the preferred embodiment, the drone 3 has a seat 31. Particularly referring to Figure 1, the sear 31 is defined inside the container 6. In particular, the seat 31 of the drone 3 is defined inside the case 7 of the container 6.

In addition, the device 1 comprises fastening means 4. The fastening means 4 are configured to lock the transceiver in the seat 31 of the drone 3. According to one aspect of the invention, the fastening means 4 of the device 1 comprise a closing element 62. In particular, the closing element 62 is flexible.

Preferably, the closing element 62 is connected to the case 7 of the container 6 at the rear surface 64 proximate the upper opening 71.

The closing element 62 can be switched between an open configuration and a closed configuration. In the open configuration, the opening 71 of the case 7 is clear. In the closed configuration, the closing element 62 engages the opening 71 of the case 7.

In particular, in the closed configuration, the closing element 62 is reversibly fixed to the front surface 63 of the case 7.

According to a first embodiment of the invention, the fastening means 4 comprise buttons (not shown). In particular, the buttons of the fastening means 4 reversibly fix the closing element 62 to the front surface 63 of the case 7 in the closed configuration. In particular, the buttons of the fastening means 4 are press stud buttons.

According to a second embodiment of the invention, the fastening means 4 comprise a buckle (not shown). The buckle reversibly fixes the closing element 62 to the front surface 63 of the case 7 in the closed configuration.

According to the present invention, the device 1 comprises a transceiver (not shown) which is configured to send and/or receive data to/from utility meters. In particular, the transceiver is able to quickly query the meters to detect the data required by the distribution companies. Preferably, the transceiver is configured to send and/or receive data to/from gas, light, water or district heating meters.

Preferably, the transceiver is defined by a known handheld terminal.

In operation, this transceiver is inserted into the seat 31 of the drone 3. More in detail, the transceiver is inserted into the seat 31 through the opening 71 of the case 7.

In the closed configuration, the closing element 62 holds the transceiver in the seat 31. In the open configuration, the closing element 62 does not engage the opening 71 of the case 7 and the transceiver can be inserted and/or removed into/from the seat 31.

The present invention further relates to a method of reading utility meters. The method comprises the step of providing a device 1 as described hereinbefore, in particular comprising the aforementioned drone 3.

Then, the drone 3 is piloted close to the meter. This can be carried out manually by remotely piloting the drone 3 or autonomously by the drone 3 itself. Advantageously, reading meters with the method as disclosed herein allows readings to be taken from meters located in hard to reach and access areas.

In particular, the method of the present invention comprises the steps of establishing a route that passes proximate a series of meters. The step of piloting the drone 3 close is carried out by moving it along this predetermined route.

Advantageously, the route that passes proximate the meters may be established while minimizing the time required for data detection.

The method comprises the steps of sending and/or receiving data to/from the meter and transmitting the detected data.

## Claims

1. A meter reading device (1), comprising:
- a transceiver configured to send and/or receive data to/from utility meters;
- a drone (3) having a seat (31), said transceiver being inserted in said seat (31);
- fastening means (4) configured to lock the transceiver in the seat (31).

2. A meter reading device (1) as claimed in claim 1, **characterized in that** it comprises a container (6) connected to the drone (3), the seat (31) being defined inside the container (6).

3. A meter reading device (1) as claimed in the preceding claim, wherein the container (6) comprises connecting elements (61), the container (6) and the drone (3) being connected by means of said connecting elements (61).

4. A meter reading device (1) as claimed in the preceding claim, wherein the drone (3) comprises at least two legs (32) and the connecting elements (61) of the container (6) comprise at least one belt (611), the container (6) being connected to the legs (32) of the drone (3) by means of said belt (611).

5. A meter reading device (1) as claimed in the preceding claim, wherein the connecting elements (61) comprise a plurality of buttons (612), namely press stud buttons, each belt (611) being able to be fastened to the container (6) by a respective button (612).

6. A meter reading device as (1) as claimed in any of claims 2 to 5, the fastening means (4) comprise a closing element (62), the fastening means (4) being operable between the container (6) and the closing element (62).

7. A meter reading device (1) as claimed in any of claims 2 to 6, wherein the container (6) is semi-rigid.

8. A method of reading a meter, comprising the steps of:
- providing a drone (3) configured to send and/or receive data to/from utility meters;
- moving the drone (3) close to the meter;
- sending and/or receiving data to/from the meter;
- transmitting the detected data.

9. A method as claimed in the preceding claim, wherein the step of moving the drone (3) close to the meter is carried out manually by remotely controlling the drone (3) or autonomously by the drone (3).

10. A method as claimed in claim 8 or 9 comprising the further steps of:
- establishing a route that passes proximate a series of meters;
- moving the drone (3) along the predetermined route.
